Europäisches Patentamt

European Patent Office

Office européen des brevets

(11) Publication number:

**0 362 701**
**A2**

# EUROPEAN PATENT APPLICATION

(21) Application number: **89117980.6**

(51) Int. Cl.⁵: **A01N 25/34 , A01N 33/18**

(22) Date of filing: **28.09.89**

(30) Priority: **07.10.88 US 255358**

(43) Date of publication of application:
**11.04.90 Bulletin 90/15**

(84) Designated Contracting States:
**AT BE CH DE ES FR GB GR IT LI LU NL SE**

(71) Applicant: **REEMAY, INC.**
**1000 Industrial Road**
**Old Hickory Tennessee 37138(US)**

(72) Inventor: **Zimmerman, Leon H.**
**147 Prospect Hill**
**Nashville Tennessee 37205(US)**

(74) Representative: **Flosdorff, Jürgen, Dr.**
**Alleestrasse 33**
**D-8100 Garmisch-Partenkirchen(DE)**

(54) Landscaping fabric and method.

(57) A landscaping fabric used to prevent growth of weeds comprises a porous nonwoven polyolefin fabric having a quantity of a dinitroaniline herbicide absorbed in the polyolefin of the fabric, permitting uniform and gradual release of the herbicide.

EP 0 362 701 A2

# LANDSCAPING FABRIC AND METHOD

## Background Of The Invention

Polymer films and porous fabrics are commonly used as geotextiles. When placed on or near the surface of the soil, a geotextile blocks passage of sunlight and minimizes the growth of weeds, with the porous materials permitting absorption of surface water. These fabrics are usually combined with a mulch overlay and are widely used in gardens, orchards, along roadsides and in various other sites to prevent growth of undesirable plant life or to control erosion.

To assure long term control of the growth of weeds and roots, proposals have been made to dispose a herbicide and other active agents in a medium or binder that allows gradual release of the active agent over a period of time. The use of individual pellets or granules of slow release herbicides, however, is not entirely effective because they are difficult to apply in a uniform manner and tend to become displaced over a period of time. A proposal has been made to employ a herbicide such as trifuralin in a matrix of polypropylene nodules or capsules, which are secured to a porous fabric in a regularly spaced pattern. While this product is very effective to prevent intrusion of the growth of plant roots over long periods of time, significant quantities of herbicide must be employed, and the product is not designed to retard or prevent growth of undesirable plants.

It is also known to employ granules of herbicide and clay beneath a porous geotextile. Again, however, uniform distribution of the granules is difficult, an excess amount is employed, and a two step operation of separately applying the herbicide and the geotextile is required.

## Summary Of The Invention

In accordance with the present invention, a herbicide, which is solid at room temperature, is uniformly applied to a sheet of polyolefin substrate, especially a porous nonwoven polyolefin fabric. The herbicide is of the type and is applied under conditions such that the polyolefin in the substrate or fabric absorbs the herbicide. Upon use as a geotextile, i.e., on soil in which plant growth is to be retarded, the herbicide is emitted gradually over a relative short period of time and in a highly uniform manner, thereby providing very effective weed control for at least one growing season.

The present landscaping geotextile offers several advantages, such as extended herbicide life versus hand application, since the polyolefin film or filaments in the fabric act as a short term reservoir for the herbicide. The release of herbicide is gradual and uniform, requiring the use of lesser amounts of herbicide per unit area. The product is more convenient to use, since the separate step of applying a herbicide to the ground is eliminated, thereby reducing labor costs.

## Description Of The Preferred Embodiments

The geotextile employed for the purposes of the present invention is a polyolefin film or fabric and is preferably a porous nonwoven, spun bonded fabric comprising a polyolefin such as polyethylene or polypropylene. A particularly suitable fabric is a nonwoven polypropylene fabric sold under the trademark "TYPAR" or "TEKTON" by Reemay, Inc. The process of making such fabrics is well known, and the final product contains a large number of polyolefin filaments which are overlapped in a continuous fashion to form a sheet of meshed and bonded filaments. Pigments such as carbon black, and other conventional additives, may be incorporated into the polymer melt that is used to make the fibers or filaments of the fabric. In the alternative, a polyolefin film may be employed, although such films are generally not permeable and would not allow the passage of water or moisture. In the case of films or low permeability fabrics, the desired degree of permeability may be imparted by mechanically forming pores, perforations or openings in the film or fabric, such as by needle punching or similar techniques.

In the case of a spunbonded polyolefin fabric, such fabric will typically have a basis weight of from about 1.0 to about 6.0 oz. per sq. yd. and a thickness in the order of from about 4 to about 20 mils, depending on the nature of the materials employed and the production technique.

It has been found that a significant and biologically effective amount of particular herbicides will be absorbed by the polyolefin substrate such that the substrate acts as a reservoir and allows gradual release of the herbicide when the substrate is placed in contact with the soil. While any herbicide capable of being absorbed in the polymeric substrate may be employed, suitable and known agents are dinitroanilines, as described in U.S. patents no. 3,111,403, no. 3,257,190, and no. 4,101,582. A particularly suitable and environmentally accepted herbicide is a dinitroaniline known generically as trifuralin and sold under the trademark "TREFLAN". Such herbicides preferably are substantially insoluble in water and have a melting point which is lower than the melting point of the substrate fabric or film being employed.

In order to assure or enhance the rapid absorption of herbicide into the polyolefin substrate, the use of heat and/or pressure is beneficially employed. For example, a web or sheet may be uniformly coated with herbicide powder in a continuous fashion, and the coated web may be subjected to heat and then cooled, or may be passed through a pressure zone. Other alternatives include melting and applying the herbicide as a liquid, such as by spraying, dipping, or other surface coating. The most rapid absorption is attained if the herbicide is vaporized, although prolonged exposure of the herbicide to the substrate at room temperatures and ambient pressures will allow substantial absorption of the herbicide.

It has been found that the polyolefin substrate is capable of absorbing up to 25 to 30 percent of the herbicide. For the purposes of a landscaping fabric which has a useful life of at least one growing season, an effective amount of herbicide by weight of fabric is in the order of from about 4 to about 15 percent. It will be appreciated that variables in the weight and thickness of the substrate, as well as the environment of use of the product, including temperature, sunlight and available moisture, will play a role in the rate of the release of the herbicide from the substrate.

It will be noted that at least a majority of the herbicide must be absorbed into the polyolefin substrate in order to provide an effective product. If the herbicide merely resided as a coating or outer layer on the substrate, the herbicide would be released too quickly and would not provide the desired gradual release, which is achieved by having the polyolefin substrate act as a matrix or solid binder for the herbicide.

Rather than applying the herbicide to the fabric in a uniform manner, application may be made in a nonuniform manner to provide more concentrated areas in the fabric, which gradually diffuse into the surrounding areas.

In addition to the herbicide, insecticides and other chemical treating agents such as fungicides enzymes and the like may be employed and incorporated into the fabric. Depending on the chemicals employed, they may be either absorbed by the fabric or applied as a coating.

The resulting landscaping fabric is nonbiodegradable and is very effective, when applied to the surface of the soil, to prevent the growth of unwanted vegetation. The fabric or sheet is preferably porous and allows passage of moisture, while it releases the herbicide gradually and uniformly into the soil.

After preparation of the treated geotextile, the material may be wrapped in a roll for easy dispensing and use. A separate plastic insert sheet may be incorporated into the roll to prevent premature evaporation or loss of the herbicide.

## Claims

1. A landscaping fabric for controlling the growth of undesirable vegetation in soil, said landscaping fabric comprising a polyolefin fabric substrate, and a quantity of water insoluble dinitroaniline herbicide, said herbicide having a melting point lower than said polyolefin, said dinitroaniline herbicide being absorbed in said polyolefin, said polyolefin acting as a reservoir for said herbicide such that said herbicide is emitted gradually and uniformly from said substrate upon contact with the soil.

2. The landscaping fabric of Claim 1, wherein the herbicide is trifuralin.

3. The landscaping fabric of Claim 1, wherein said fabric comprises spunbonded polypropylene, with said herbicide being absorbed in said polypropylene.

4. The landscaping fabric of Claim 1, wherein said quantity of herbicide is in the order of from about 4 to about 15 percent by weight of said fabric.

5. The landscaping material of Claim 1 wherein the substrate is a film.

6. The landscaping material of Claim 1 wherein the film is porous.

7. The method of making a landscaping fabric containing a herbicide to control vegetation, said method comprising the steps of providing a porous nonwoven polyolefin fabric substrate, providing a water insoluble dinitroaniline herbicide for application to the substrate, and applying said herbicide to said substrate under conditions sufficient to cause said herbicide to be substantially absorbed into said polyolefin, said polyolefin acting as a reservoir for said herbicide and allowing only gradual release of herbicide from the polyolefin of said substrate over a period of time.

8. The method of Claim 7, comprising the step of heating the herbicide prior to contact with the fabric.

9. The method of Claim 7, comprising the additional step of heating the film to increase the absorption rate of the herbicide.